# EUROPÄISCHE PATENTSCHRIFT

(11) **EP 3 326 261 B1**
(45) Veröffentlichungstag und Bekanntmachung des Hinweises auf die Patenterteilung: **11.11.2020**
(21) Anmeldenummer: 16753588.9
(22) Anmeldetag: 21.07.2016
(51) Int. Cl.: H02J 50/10, B23Q 1/00, H02J 50/40, H02J 50/05, H02J 50/80, H02J 50/30

(54) **ÜBERTRAGUNGSEINRICHTUNG**
TRANSMISSION DEVICE
DISPOSITIF DE TRANSMISSION

(30) Priorität: 24.07.2015 DE 102015214095
(43) Veröffentlichungstag der Anmeldung: 30.05.2018
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Kordel, Mattias
(86) Internationale Anmeldenummer: PCT/EP2016/067448
(87) Internationale Veröffentlichungsnummer: WO 2017/016983

(56) Entgegenhaltungen:
- EP-A1- 2 502 699
- DE-A1- 4 201 013
- DE-A1-102008 055 971

## Beschreibung

Die Erfindung betrifft eine Übertragungseinrichtung.

Übertragungseinrichtungen der hier angesprochenen Art sind bekannt. Aus DE 10 2008 055 971 A1 geht eine Übertragungseinrichtung mit einer feststehenden übergeordneten Maschine und einem mit der übergeordneten Maschine koppelbaren, gegenüber dieser rotierbaren Teilnehmer mit einem Sensor hervor, wobei die Übertragungseinrichtung einen ersten Energieversorgungspfad zur berührungslosen Übertragung von Energie von der Maschine hin zu dem Teilnehmer auf induktivem Weg aufweist, wobei dieser Energieversorgungspfad zusätzlich auch zur Übertragung von Daten verwendet werden kann. Neben dieser berührungslosen Übertragungstrecke ist eine berührende Übertragungsstrecke vorgesehen, die für die Übertragung von höheren elektrischen Leistungen geeignet ist.

Aus DE 42 01 013 A1 geht eine Einrichtung zur Lageerfassung eines rotierenden Werkzeuges hervor.

Übertragungseinrichtungen dienen dazu, Energie von einer übergeordneten Maschine an einen Teilnehmer, der mit der Maschine zusammenwirkt, zu übertragen. Sie werden beispielsweise in Zusammenhang mit Werkzeugmaschinen und mit diesen gekoppelten Werkzeugelementen verwendet und sind eingerichtet, berührungslos Energie von der feststehenden Werkzeugmaschine, auch Stator genannt, zu dem rotierbaren Werkzeugelement, auch Rotor genannt, über einen Luftspalt zwischen Werkzeugmaschine und Werkzeugelement zu übertragen. Dabei stellt die Werkzeugmaschine die übergeordnete Maschine und das Werkzeugelement den Teilnehmer dar. Die Übertragungseinrichtungen sind außerdem dazu eingerichtet, einen berührungslosen Austausch von Daten zwischen der Werkzeugmaschine und dem Werkzeugelement über den Luftspalt zu ermöglichen, vorzugsweise bidirektional. Derartige bekannte Übertragungseinrichtungen weisen den Nachteil auf, dass bei einer Abschaltung der Werkzeugmaschine, beispielsweise bei einer Notabschaltung, einem Benutzer keine Informationen über den Zustand des Werkzeugelements, insbesondere auch nicht über ein Werkzeug des Werkzeugelements vorliegen. Zum einen ist dabei nicht feststellbar, welcher Grund zu einer Abschaltung der Werkzeugmaschine führte, außerdem ist nicht ersichtlich, in welchem Betriebszustand sich das Werkzeugelement beziehungsweise dessen Werkzeug bei der Abschaltung befindet. Diese mangelnden Informationen stellen ein Risiko dar, weil gegebenenfalls ein Fehler in dem Werkzeugelement nicht korrekt erfasst wird und weil bei der Wiedereinschaltung und der Wiederaufnahme einer Bearbeitung eines Werkstücks mittels des Werkzeugs keine definierten Informationen vorliegen. Dies kann zu nachhaltigen Schäden an dem Werkzeugelement und/oder an dem bearbeiteten Werkstück führen, außerdem auch zu Verletzungen einer Bedienperson.

Aufgabe der Erfindung ist es daher, eine Übertragungseinrichtung zu schaffen, welche diesen Nachteil nicht aufweist.

Zur Lösung dieser Aufgabe wird eine Übertragungseinrichtung vorgeschlagen, welche die in Anspruch 1 genannten Merkmale aufweist.

Die Übertragungseinrichtung ist eingerichtet, Energie von einer feststehenden übergenordneten Maschine zu einem mit der Maschine gekoppelten und gegenüber dieser rotierbaren Teilnehmer über einen Luftspalt zwischen der Maschine und dem Teilnehmer berührungslos zu übertragen. Die Übertragungseinrichtung ist außerdem so ausgelegt, dass ein berührungsloser Austausch von Daten zwischen der übergeordneten Maschine und dem Teilnehmer über den Luftspalt, vorzugsweise bidirektional, erfolgen kann. Dieser Datenaustausch dient dazu, einerseits den Teilnehmer von der Maschine aus zu steuern oder zu regeln, andererseits dazu, Informationen von dem Teilnehmer an die Maschine zu übertragen, um den Ist-Zustand des Teilnehmers erfassen zu können, beispielsweise den Betriebszustand des Teilnehmers, welcher einen Sensor umfasst. Die Übertragungseinrichtung weist einen ersten Energieversorgungspfad sowie einen zweiten Energieversorgungspfad auf. Dabei ist der erste Energieversorgungspfad eingerichtet, Energie für den Teilnehmer bereitzustellen. Der zweite Energieversorgungspfad ist eingerichtet, den mindestens einen Sensor des Teilnehmers mit Energie zu versorgen, außerdem dazu, auf jeden Fall Energie für den Austausch von Daten bereitzustellen. Die hier geschaffene Übertragungseinrichtung zeichnet sich weiterhin dadurch aus, dass der erste und zweite Energieversorgungspfad getrennt schaltbar sind, derart, dass der zweite Energieversorgungspfad beim Abschalten des ersten Energieversorgungspfads weiter Energie bereitstellt. Wenn also die Energieversorgung für den Teilnehmer unterbrochen wird, steht weiterhin Energie für den mindestens einen Sensor des Teilnehmers sowie für den vorzugsweise bidirektionalen Austausch von Daten zur Verfügung. Auf diese Weise ist es möglich, mithilfe des mindestens einen Sensors den Zustand des Teilnehmers zu erfassen, zum Beispiel die Temperatur, Druckwerte und dergleichen verschiedener Bauteile des Teilnehmers. Die Informationen über den Teilnehmer können über den Luftspalt weiterhin berührungslos an die übergeordnete Maschine übertragen werden, weil hierfür auch nach Abschalten der über den ersten Energieversorgungspfad erfolgenden Energieversorgung für den Teilnehmer über den zweiten Energieversorgungspfad Energie für den mindestens einen Sensor und den Datenaustausch bereitsteht. Ein Benutzer kann also nach Abschaltung der übergeordneten Maschine und des Teilnehmers mögliche Fehler des Teilnehmers mit wenigstens einem Sensor erfassen. Zum einen kann also eine Diagnose durchgeführt werden, ob und wo ein Fehler im Teilnehmer vorliegt, der zur Abschaltung der übergeordneten Maschine geführt haben könnte. Außerdem kann ein Benutzer auch nach Abschaltung der übergeordneten Maschine und der über den ersten Energieversorgungspfad erfolgenden Energieversorgung für den Teilnehmer eine Diagnose durchführen und verschiedene Betriebszustände des Teilnehmers erfassen. Bei Wiederanlaufen der Maschine ist dem Benutzer bekannt, in welchem Betriebszustand sich der Teilnehmer befindet. Auf diese Weise kann der Bearbeitungsvorgang eines Werkstücks nach der Abschaltung und nach dem Wiederanlaufen der Maschine und des Teilnehmers mit hoher Sicherheit durchgeführt werden.

Bei einem Totalausfall der Energieversorgung für die Übertragungseinrichtung ist es allerdings nicht möglich, eine Diagnose des Teilnehmers durchzuführen. Aufgrund der getrennten Schaltbarkeit des ersten und zweiten Energieversorgungspfads ist es möglich, bei Wiederherstellung der Energieversorgung zunächst den zweiten Energieversorgungspfad einzuschalten, um eine Diagnose des Teilnehmers durchzuführen und mittels des mindestens einen Sensors und durch Datenaustausch den aktuellen Betriebszustand des Teilnehmers zu erfassen. Es ist also dann möglich, eine Diagnose des Teilnehmers durchzuführen und Schäden bei Wiederinbetriebnahme zu vermeiden. Erst dann wird der erste Energieversorgungspfad mit Energie beaufschlagt.

Bei einem bevorzugten Ausführungsbeispiel der Übertragungseinrichtung ist vorgesehen, dass der Teilnehmer mindestens einen Aktuator aufweist, welcher von dem ersten Energieversorgungspfad mit Energie versorgt wird. Dem Aktuator ist vorzugsweise ein Sensor zugeordnet, welcher über den zweiten Energieversorgungspfad mit Energie versorgt wird. Bei einem Energieausfall ist es also möglich, mittels des mindestens einen Sensors eine aktuelle Position des Aktuators zu ermitteln und die zugehörigen Daten an die übergeordnete Maschine zu übertragen. Wenn der Teilnehmer nur einen einzigen Sensor aufweist, kann dieser dem Aktuator zugeordnet sein, um sicherzustellen, dass bei der Wiederaufnahme der Bearbeitung eines Werkstücks der Aktuator sich in einer für die Weiterbearbeitung passenden Position befindet. Die Diagnose erfasst in diesem Fall ausschließlich die Position des Aktuators. Hat der Teilnehmer selbst noch mindestens einen Sensor, so kann, wie oben beschrieben, dessen Betriebszustand erfasst werden, also beispielsweise die Temperatur verschiedener Bauteile des Teilnehmers, Druckwerte von medienführenden Leitungen und dergleichen.

Bei einem bevorzugten Ausführungsbeispiel der Übertragungseinrichtung ist vorgesehen, dass der erste Energieversorgungspfad mittels einer Schalteinrichtung schaltbar, insbesondere abschaltbar ist, die vorzugsweise ein Sicherheitsrelais umfasst. Derartige Sicherheitsrelais können extern, das heißt in einer Energieversorgung der übergeordneten Maschine, oder aber intern, das heißt innerhalb der Übertragungseinrichtung, vorgesehen sein. Bevorzugt werden zertifizierte Sicherheitsrelais verwendet, welche die "Leistungsenergie" sicher abschalten und so einen Safety-Zustand gewährleisten, in dem die übergeordnete Maschine sicher abgeschaltet ist, also insbesondere kein Drehmoment mehr an ein Werkzeugelement abgibt, sodass dieses stillsteht. Überdies kann ein Aktuator seine Position nicht ändern. In diesem Zustand wird die Bearbeitung eines Werkstücks unterbrochen und sichergestellt, dass die übergeordnete Maschine nicht anläuft, bevor die Situation geprüft und die Maschine wieder freigegeben wird. Mit "Leistungsenergie" wird hier also die über den ersten Energieversorgungspfad gelieferte Energie bezeichnet, die dazu dient, dass mit dem Teilnehmer mechanische und kinetische Arbeit geleistet werden kann. Überdies steht die Leistungsenergie auch, sofern vorhanden, einem Aktuator des Teilnehmers zur Verfügung.

Bevorzugte Ausführungsbeispiele der Übertragungseinrichtung zeichnen sich dadurch aus, dass über den ersten Energieversorgungspfad beispielsweise eine 48V-Versorgung mit einer Leistung von ≥ 800W realisiert wird, die die mechanische und kinetische Arbeit des Teilnehmers sowie des Werkzeugs inklusive des mindestens einen Aktuators ermöglicht. Weiterhin ist vorgesehen, dass über den zweiten Energieversorgungspfad beispielsweise eine 5V- oder 12V-Versorgung realisiert wird, welche dazu dient, mindestens einen Sensor des Teilnehmers zu versorgen, damit dieser verwendet werden kann zur Durchführung einer Diagnose und/oder zur Erfassung der aktuellen Werkzeugeinstellung, insbesondere der aktuellen Position eines Aktuators des Werkzeugs. Der zweite Energieversorgungspfad ist beispielsweise für eine Leistung von ≥ 30W ausgelegt. Übergeordneter Gedanke der Energieversorgung ist, dass über den ersten Energieversorgungspfad Leistungsenergie für von dem Werkzeugelement zu leistende mechanische und kinetische Arbeit bereitgestellt wird, und über den zweiten Energieversorgungspfad Kommunikationsenergie für den Austausch von Daten sowie Energie für den mindestens einen Sensor. Dabei ist vorgesehen, dass über den ersten Energieversorgungspfad mehr, vorzugsweise wesentlich mehr, Energie bereitstellbar ist als über den zweiten.

Dadurch, dass die Energieversorgung für mechanische und kinetische Arbeit des Teilnehmers getrennt ausgelegt ist von der den Datenaustausch erforderlichen Energie und der Versorgung von mindestens einem Sensor, ist es also möglich, auch bei Abschaltung der 48V-Versorgung wegen der Aufrechterhaltung der 12V-Versorgung eine Diagnose durchzuführen und unter anderem die aktuelle Position des Werkzeugs zu erfassen.

Ein Ausführungsbeispiel der Übertragungseinrichtung zeichnet sich dadurch aus, dass die Energieübertragung sowie der Austausch von Daten über den Luftspalt induktiv oder kapazitiv oder optisch über eine Glasfaser erfolgt. Eine derartige Realisierung ist bekannt und ausgereift. Insbesondere ist es bekannt, die Elemente der Energieversorgung und des Datenaustauschs über den Luftspalt zu vergießen, insbesondere mit einem Kunstharz, sodass diese widerstandsfähig sind gegen äußere Einflüsse, durch Kühl-/Schmiermittel, Öl und dergleichen. Außerdem können die vergossenen Elemente leicht gereinigt werden. Überdies sind stromführende Teile verdeckt, sodass bei Arbeiten an der übergeordneten Maschine und dem Teilnehmer Verletzungen mit hoher Sicherheit ausgeschlossen sind.

Ein bevorzugtes Ausführungsbeispiel der Übertragungseinrichtung zeichnet sich dadurch aus, dass die Maschine eine übergeordnete Maschinensteuerung aufweist, die eingerichtet ist, Daten von dem Teilnehmer zu empfangen und zu verarbeiten sowie Daten an den Teilnehmer zu übertragen. Es ist damit möglich, den Teilnehmer mithilfe von in der übergeordneten Maschinensteuerung erzeugten Daten zu steuern oder zu regeln. Dasselbe gilt für das Werkzeug des Teilnehmers. Außerdem kann ein Datenaustausch von dem Teilnehmer bis zur übergeordneten Maschinensteuerung erfolgen, sodass diese den Status des Teilnehmers erfassen kann. Darüber hinaus ist es bei einer derartigen Realisierung sehr einfach möglich, mittels der übergeordneten Maschinensteuerung die Bearbeitung eines Werkstücks zu steuern.

Bei einem weiteren bevorzugten Ausführungsbeispiel der Übertragungseinrichtung wird die übergeordnete Maschine mit einer Elektronikeinrichtung ausgestattet, die eingerichtet ist, über den ersten und/oder zweiten Energieversorgungspfad übertragene Energie und/oder Daten zu regeln oder zu steuern. Eine derartige Realisierung erlaubt eine relativ einfache und effektive Steuerung eines Bearbeitungsvorgangs eines Werkstücks mittels der Maschine und des Teilnehmers.

Entsprechend kann bei einem weiteren bevorzugten Ausführungsbeispiel der Übertragungseinrichtung vorgesehen werden, dass auch der Teilnehmer eine Elektronikeinrichtung umfasst, die eingerichtet ist, die in den Teilnehmer über den ersten und/oder zweiten Energieversorgungspfad eingespeiste Energie und/oder die an dem Teilnehmer ankommenden und/oder die von dem Teilnehmer bereitgestellten Daten zu regeln oder zu steuern. Eine derartige Realisierung erlaubt eine autarke Auslegung des Teilnehmers, dessen Energieversorgung und Datenübertragung optimal ausgelegt werden kann für das Zusammenspiel mit einer übergeordneten Maschine.

Ein weiteres bevorzugtes Ausführungsbeispiel der Übertragungseinrichtung zeichnet sich dadurch aus, dass der Teilnehmer einen Motor und/oder ein Getriebe und/oder eine Kupplung aufweist. Es ist also möglich, den Teilnehmer sehr flexibel an verschiedene Anwendungsfälle anzupassen. Dabei wird mittels des mindestens einen Sensors im laufenden Betrieb eine Überwachung des Teilnehmers ermöglicht, insbesondere aber auch nach einer Abschaltung, insbesondere Notabschaltung der übergeordneten Maschine, eine Diagnose durchzuführen, ob und inwieweit ein Fehler in dem Teilnehmer vorliegt, der möglicherweise die Notabschaltung ausgelöst oder dazu beigetragen hat.

Besonders bevorzugt wird ein Ausführungsbeispiel der Übertragungseinrichtung, bei der das Werkzeug des Teilnehmers als Zerspanungswerkzeug oder als Greifwerkzeug oder als Spannwerkzeug ausgebildet ist.

Besonders bevorzugt wird ein Ausführungsbeispiel, welches sich dadurch auszeichnet, dass die übergeordnete Maschine ein Roboter, ein Automatisierungssystem, ein Ladeportal und/oder eine Handlingsmaschine ist. Deutlich wird, dass die Übertragungseinrichtung in einem weiten technischen Bereich einsetzbar ist zwischen einem Antrieb einerseits und einem sensorischen Element anderseits, also einem hier als Teilnehmer bezeichneten Element, welches mindestens einen Sensor aufweist.

Weiterhin wird ein Ausführungsbeispiel einer Übertragungseinrichtung bevorzugt, welches sich dadurch auszeichnet, dass der Teilnehmer ein Adapter, ein Zwischenstück oder ein Werkzeugelement ist, welches beispielsweise der spanenden Bearbeitung eines Werkstücks dient oder als Greifwerkzeug ausgebildet ist, um im Rahmen einer automatisierten Herstellung oder Bearbeitung von Werkstücken Teile an einen Bearbeitungsort liefert oder aber dazu dient, Teile in einem Lager unterzubringen oder aus diesem zu entnehmen. Schließlich kann der Teilnehmer auch als Spannwerkzeug ausgelegt sein, welches dazu dient, ein beliebiges Werkzeug, beispielsweise ein Zerspanungswerkzeug aufzunehmen, oder aber ein Schraubwerkzeug oder dergleichen.

Besonders bevorzugt wird eine Ausgestaltung der Übertragungseinrichtung, die eingerichtet ist, den Teilnehmer für die Verwendung in Bearbeitungszentren und/oder in Sonderwerkzeugen auszulegen. Insbesondere kann die Auslegung durch einen entsprechenden Antrieb des Teilnehmers, durch Sensoren des Teilnehmers und/oder des Werkzeugs sowie durch spezielle Aktuatoren erfolgen, die als lineare oder exzentrische Aktuatoren ausgelegt sind. Vorzugsweise sind diesen Aktuatoren entsprechend ausgelegte Sensoren zugeordnet, welche die aktuelle Position der Aktuatoren erfassen können, zum einen während einer laufenden Bearbeitung eines Werkstücks und auch zum anderen während einer Diagnose insbesondere bei einer Abschaltung beziehungsweise Notabschaltung.

Besonders bevorzugt wird überdies eine Übertragungseinrichtung, die sich durch einen modularen Aufbau auszeichnet. Dabei ist es möglich, Elemente sowohl der übergeordneten Maschine als auch des Teilnehmers für bestimmte Anwendungsfälle speziell auszulegen und in der Maschine beziehungsweise dem Teilnehmer vorzusehen. Dadurch ist eine einfache und kostengünstige Anpassung der Übertragungseinrichtung an verschiedene Anwendungsfälle möglich, außerdem eine einfache und kostengünstige Reparatur.

Die Erfindung wird im Folgenden anhand der Zeichnung näher erläutert. Es zeigen:
- Figur 1: eine Prinzipskizze einer herkömmlichen Übertragungseinrichtung und
- Figur 2: eine Prinzipskizze einer erfindungsgemäßen Übertragungseinrichtung.

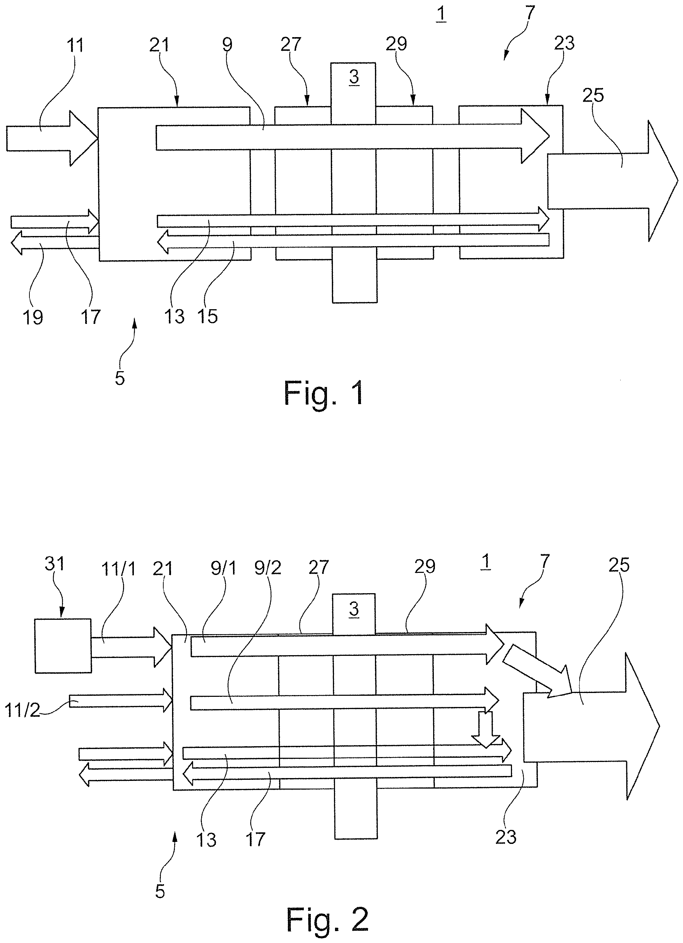

Figur 1 zeigt in einer Prinzipskizze eine bekannte Übertragungseinrichtung 1. In der Skizze ist durch ein Rechteck ein Luftspalt 3 angedeutet. Links von diesem sind Teile einer stationären übergeordneten Maschine 5 angedeutet und rechts davon Teile eines gegenüber der Maschine 5 rotierbaren Teilnehmers 7. Hier wird beispielhaft davon ausgegangen, dass die angesprochene übergeordnete Maschine 5 vorzugsweise eine Werkzeugmaschine ist und der Teilnehmer 7 insbesondere ein Werkzeugelement. Die Ausführungen zu der Werkzeugmaschine einerseits und zu dem Werkzeugelement andererseits gelten aber allgemein für eine übergeordnete Maschine und einen dieser zugeordneten Teilnehmer. Das Werkzeugelement 7 ist mit der Werkzeugmaschine 5 gekoppelt, derart, dass von der Werkzeugmaschine 5 ein Drehmoment in das Werkzeugelement 7 eingeleitet werden kann. Die Befestigung eines Werkzeugelements 7 an einer Werkzeugmaschine 5 ist bekannt, sodass auf die Art der Kopplung, über welche das Drehmoment in das Werkzeugelement 7 einleitbar ist, hier nicht näher eingegangen wird. Es ist überdies bekannt, von der Werkzeugmaschine 5 aus, ein Kühl-/Schmiermittel und/oder andere Medien an das Werkzeugelement 7 abzugeben. Die hierfür erforderlichen Leitungen sind in Figur 1 weggelassen.

Die Energieübertragung von der Werkzeugmaschine 5 an das Werkzeugelement 7 wird durch einen Pfeil 9 angedeutet. Es ist ersichtlich, dass die Energie über den Luftspalt 3 berührungslos an das Werkzeugelement 7 abgegeben wird. Die Energieversorgung der Werkzeugmaschine 5 wird durch einen weiteren Pfeil 11 angedeutet.

In Figur 1 ist ein von links nach rechts von der Werkzeugmaschine 5 ausgehender und bis in das Werkzeugelement 7 reichender Pfeil 13 ersichtlich. Er symbolisiert eine Datenübertragung von der Werkzeugmaschine 5 in das Werkzeugelement 7, die über den Luftspalt 3 hinweg berührungslos erfolgt.

Der Austausch von Daten zwischen der Werkzeugmaschine 5 und dem Werkzeugelement 7 erfolgt vorzugsweise bidirektional. Daher ist von rechts nach links ein von dem Werkzeugelement 7 ausgehender und in die Werkzeugmaschine 5 reichender Pfeil 15 zu erkennen, welcher die Datenübertragung vom Werkzeugelement 7 in die Werkzeugmaschine 5 andeutet. Auch diese Datenübertragung erfolgt berührungslos über den Luftspalt 3 hinweg.

Durch Pfeile 17 und 19 ist angedeutet, dass Daten in die Werkzeugmaschine 5 eingespeist werden können (Pfeil 17) und von der Werkzeugmaschine 5 an andere Einrichtungen abgegeben werden können, wobei diese Daten insbesondere aus dem Werkzeugelement 7 stammen (Pfeil 19).

Die Werkzeugmaschine 5 kann mit einer hier nicht dargestellten übergeordneten Maschinensteuerung zusammenwirken, die hier quasi links von der Werkzeugmaschine 5 angeordnet und so eingerichtet ist, dass sie Daten für die Werkzeugmaschine 5 und insbesondere für das Werkzeugelement 7 bereitstellt, die dann entsprechend dem Pfeil 17 zur Werkzeugmaschine 5 geleitet und von dieser entsprechend dem Pfeil 15 an das Werkzeugelement 7 weitergeleitet werden. Von dem Werkzeugelement 7 ausgehende Daten, die beispielsweise von mindestens einem Sensor gewonnen werden, werden entsprechend dem Pfeil 13 berührungslos über den Luftspalt 3 an die Werkzeugmaschine 5 weitergeleitet und entsprechend dem Pfeil 19 an die übergeordnete Maschinensteuerung. Es wird also vorzugsweise sowohl innerhalb der Übertragungseinrichtung 1 als auch in der Verbindung zur übergeordneten Maschinensteuerung ein bidirektionaler Datenaustausch realisiert.

Mithilfe dieser übergeordneten Maschinensteuerung kann also die Energieversorgung und/oder der Austausch von Daten gesteuert oder geregelt werden.

Die bekannte Übertragungseinrichtung 1 ist so ausgebildet, dass die Werkzeugmaschine 5 eine Elektronikeinrichtung 21 aufweist, die so eingerichtet ist, die an das Werkzeugelement 7 weitergeleitete Energie zu steuern oder zu regeln. Sie ist weiterhin so eingerichtet, dass sie den hier bidirektionalen Austausch von Daten, der durch die Pfeile 13 und 15 angedeutet ist, zu steuern oder zu regeln.

Entsprechend weist das Werkzeugelement 7 eine Elektronikeinrichtung 23 auf, welche eingerichtet ist, die in das Werkzeugelement 7 eingespeiste Energie zu regeln oder zu steuern und auch den hier bidirektionalen Austausch von Daten, der durch die Pfeile 13 und 15 angedeutet ist, zu regeln und zu steuern.

Durch einen Pfeil 25 ist andeutet, dass das Werkzeugelement 7 so ausgebildet ist, mechanische und/oder kinetische Arbeit zu leisten. Dazu ist das Werkzeugelement 7 mit einem hier nicht dargestellten Werkzeug ausgestattet. Das als Zerspanungswerkzeug, beispielsweise als Dreh- und/oder als Honwerkzeug ausgelegte Werkzeug weist vorzugsweise mindestens einen Aktuator auf, beispielsweise eine Aussteuereinrichtung, welche mindestens eine an dem Drehwerkzeug vorgesehene Schneide verlagert. Bei dem Honwerkzeug kann vorgesehen sein, dass der mindestens eine Aktuator eine verlagerbare Honleiste gegenüber dem Grundkörper des Honwerkzeugs verlagert, um ein bestimmtes Bearbeitungsergebnis bei der Bearbeitung eines Werkstücks zu erzielen. Die Aktivierung und Einstellung der Aussteuereinrichtungen kann sowohl von der Elektronikeinrichtung 23 des Werkzeugelements 7 als auch von der Elektronikeinrichtung 21 der Werkzeugmaschine 5 beeinflusst werden, darüber hinaus auch durch die übergeordnete Maschinensteuerung.

Als Aussteuereinrichtungen können exzentrische oder lineare Aussteuereinrichtungen verwendet werden, die vorzugsweise jeweils mit mindestens einem Sensor versehen sind, welcher die aktuelle Position der Aussteuereinrichtung erfasst.

Das Werkzeug kann auch als Greifwerkzeug ausgelegt sein, bei dem mindestens ein Aktuator als Greifer ausgebildet ist, oder aber als Spannwerkzeug, bei dem mindestens ein Aktuator als Spannelement ausgelegt ist.

Der Austausch von Daten über den Luftspalt kann induktiv oder kapazitiv oder optisch erfolgen. Bei dem hier dargestellten Ausführungsbeispiel ist eine Spule der feststehenden Werkzeugmaschine 5 dargestellt, die daher als Statorspule 27 bezeichnet wird. Entsprechend ist hier beispielhaft eine dem drehbaren Werkzeugelement 7 zugeordnete Spule vorgesehen, die daher hier als Rotorspule 29 bezeichnet wird.

Wie bereits ausgeführt, sind die Elemente der Werkzeugmaschine 5 und des Werkzeugelements 7, insbesondere die Statorspule 27 und/oder die Rotorspule 29 eingegossen, vorzugsweise in ein bekanntes Harz, um die Elemente vor äußeren Einflüssen wie Kühl-/Schmiermittel, Öle, Reinigungsmittel und dergleichen zu schützen. Gleichzeitig wird durch diese Ausgestaltung sichergestellt, dass auch bei demontiertem Werkzeugelement 7 die Elemente, insbesondere auch stromführende Elemente, nicht versehentlich berührt werden können, was zu Verletzungen führen kann.

Bei einer Abschaltung der Werkzeugmaschine 5 wird keine Energie mehr an das Werkzeugelement 7 übertragen. Selbstverständlich ist es damit nicht mehr möglich, mechanische und/oder kinetische Arbeit zu leisten. Wesentlich ist, dass aber auch die Datenübertragung, die durch die Pfeile 13 und 15 sowie 17 und 19 angedeutet ist, bei einer Abschaltung der Energiezufuhr nicht mehr möglich ist.

Zum einen kann ein Benutzer den aktuellen Zustand weder der Werkzeugmaschine 5 noch insbesondere des Werkzeugelements 7 erfassen, auch nicht den eines zugehörigen Werkzeugs mit mindestens einem Aktuator. Daher ist es einem Benutzer nicht möglich festzustellen, ob möglicherweise Gründe an dem Werkzeugelement 7 oder der Werkzeugmaschine 5 liegen, die zu einer Abschaltung der Energieversorgung geführt haben. Dies gilt insbesondere für eine Notabschaltung, weil in diesem Fall nicht ohne weiteres ersichtlich ist, was zu dieser Notabschaltung geführt hat.

Der Benutzer erhält also bei einem Energieausfall keine Informationen über mögliche Fehlerursachen in der Übertragungseinrichtung 1. Darüber hinaus kann ein Benutzer nicht absehen, in welchem Funktionszustand sich das hier nicht dargestellte Werkzeug des Werkzeugelements 7 befindet. Aufgrund dieser letzteren Tatsache ist es also möglich, dass bei einem Wiederanlaufen der Werkzeugmaschine 5 und damit des Werkzeugelements 7 Schäden sowohl an dem bearbeiteten Werkstück als auch an dem Werkzeug des Werkzeugelements 7, als auch an dem Werkzeugelement 7 selbst und/oder der Werkzeugmaschine 5 eintreten. Dabei kann es auch zu einer Gefährdung eines Benutzers der Werkzeugmaschine 5 kommen.

Figur 2 zeigt eine Prinzipskizze einer erfindungsgemäßen Übertragungseinrichtung 1. Gleiche und funktionsgleiche Elemente sind mit gleichen Bezugszeichen versehen, sodass insofern auf die vorangegangene Beschreibung verwiesen wird.

Für die in Figur 2 dargestellte Übertragungseinrichtung gilt alles für die in Figur 1 dargestellte Übertragungseinrichtung entsprechend. Insbesondere ist auch hier festzuhalten, dass die Prinzipskizze der Übertragungseinrichtung gemäß Figur 2 auf der linken Seite eine übergeordnete Maschine 5 und auf der rechten Seite einen Teilnehmer 7 wiedergibt, wobei zwischen der übergeordneten Maschine 5 und dem Teilnehmer 7 ein Luftspalt 3 vorgesehen ist. Auch hier wird lediglich beispielhaft im Folgenden davon ausgegangen, dass die übergeordnete Maschine eine Werkzeugmaschine 5 und der Teilnehmer ein Werkzeugelement 7 ist. Die folgenden Ausführungen zu der Werkzeugmaschine einerseits und zum dem Werkzeugelement andererseits gelten aber allgemein für eine übergeordnete Maschine und einen dieser zugeordneten Teilnehmer.

Die erfindungsgemäße Übertragungseinrichtung stimmt insofern mit der bekannten Übertragungseinrichtung gemäß Figur 1 darin überein, dass sie Teile einer Werkzeugmaschine 5 sowie ein Werkzeugelement 7 umfasst, wobei zwischen der feststehenden Werkzeugmaschine, auch Stator genannt, und dem mit der Werkzeugmaschine 5 gekoppelten rotierbaren Werkzeugelement 7, auch Rotor genannt, ein Luftspalt 3 besteht, über den berührungslos Energie übertragen wird. Auch der Austausch von Daten zwischen der Werkzeugmaschine 5 und dem Werkzeugelement 7 und vorzugsweise umgekehrt, außerdem mit einer hier nicht dargestellten vorzugsweise vorgesehenen übergeordneten Maschinensteuerung erfolgt ebenfalls berührungslos über den Luftspalt 3. Durch die in entgegengesetzte Richtungen weisenden Pfeile 13 und 15 wird deutlich, dass auch hier eine bevorzugt bidirektional ausgelegte Datenübertragung sowohl von der Werkzeugmaschine 5 zum Werkzeugelement 7 als auch in umgekehrter Richtung von dem Werkzeugelement 7 zu der Werkzeugmaschine 5 erfolgt sowie von und zu der übergeordneten Maschinensteuerung gemäß den Pfeilen 17 und 19.

Auch bei der erfindungsgemäßen Übertragungseinrichtung 1 wird Energie in die Werkzeugmaschine 5 eingespeist und berührungslos über den Luftspalt 3 an das Werkzeugelement 7 weitergegeben, damit mittels des Werkzeugelements 7 mechanische oder kinetische Arbeit geleistet werden kann, was durch einen Pfeil 25 angedeutet ist.

Die Werkzeugmaschine 5 weist auch hier eine Elektronikeinrichtung 21 auf, das Werkzeugelement 7 eine Elektronikeinrichtung 23.

Die berührungslose Energie- und Datenübertragung über den Luftspalt 3 kann induktiv oder kapazitiv oder optisch erfolgen. Auch hier sind beispielhaft eine Statorspule 27 der Werkzeugmaschine 5 sowie eine Rotorspule 29 des Werkzeugelements 7 dargestellt.

Das Werkzeugelement 7 kann einen Motor und/oder ein Getriebe und/oder eine Kupplung aufweisen. Grundsätzlich ist der Aufbau eines Werkzeugelements 7 der hier angesprochenen Art bekannt. Es umfasst auch ein hier nicht dargestelltes Werkzeug, das als Zerspanungs-, Greif- oder Spannwerkzeug ausgelegt ist, hier beispielhaft als Drehstahl- oder Honwerkzeug ausgebildet sein kann. Auch andere Werkzeuge können Teil des Werkzeugelements 7 sein. Die Werkzeuge sind auf bekannte Weise mit dem Werkzeugelement 7 verbunden, sodass ein in das Werkzeugelement 7 eingeleitetes Drehmoment an das Werkzeug übertragen wird. Darüber hinaus ist das Werkzeugelement 7 mit mindestens einem Sensor ausgestaltet, der den internen Zustand des Werkzeugelements 7 aber auch den des Werkzeugs erfassen kann, insbesondere eines Aktuators, der an dem Werkzeug vorgesehen ist. Aktuatoren der hier angesprochenen Art sind bekannt. Sie wurden im Übrigen in Zusammenhang mit Figur 1 erwähnt, sodass auf die dortigen Erläuterungen verwiesen wird.

Der mindestens eine Sensor des Werkzeugelements 7 kann im Werkzeug vorgesehen sein, um die aktuelle Position des mindestens einen Aktuators des Werkzeugs erfassen zu können. Das Werkzeug umfasst allerdings vorzugsweise mindestens einen eigenen Sensor.

Auch das Werkzeugelement gemäß Figur 2 ist so ausgelegt, dass es sowohl in Zusammenhang mit Bearbeitungszentren als auch in Zusammenhang mit Sonderwerkzeugen verwendbar ist.

Auch hier ist vorgesehen, dass sich die Übertragungseinrichtung 1 durch einen modularen Aufbau auszeichnet, wie er oben bereits erläutert wurde.

Die in Figur 2 dargestellte erfindungsgemäße Übertragungseinrichtung 1 unterscheidet sich von der in Figur 1 dargestellten und erläuterten dadurch, dass die erfindungsgemäße Übertragungseinrichtungen einen ersten Energieversorgungspfad 9/1 sowie einen zweiten Energieversorgungspfad 9/2 umfasst. Entsprechend ist auch vorgesehen, dass die Werkzeugmaschine 5 zwei getrennte Energieversorgungen 11/1 und 11/2 umfasst. Hier ist vorgesehen, dass der erste Energieversorgungspfad 9/1 eingerichtet ist, Energie für das Werkzeugelement 7 und für mindestens einen Aktuator des hier nicht dargestellten Werkzeugs des Werkzeugelements 7 bereitzustellen, sofern dieser vorgesehen ist. Der zweite Energieversorgungspfad 9/2 dient dazu, Energie bereitzustellen für den vorzugsweise bidirektionalen Austausch von Daten, der durch die Pfeile 13 und 17 dargestellt ist, außerdem für den mindestens einen Sensor.

Es sind hier also zwei getrennte Energieversorgungspfade vorgesehen, die voneinander unabhängig sind und die getrennt schaltbar sind. Dabei ist vorgesehen, dass bei einer Abschaltung des ersten Energieversorgungspfads 9/1 der zweite Energieversorgungspfad 9/2 weiterhin Energie bereitstellt für den Austausch von Daten. Wenn also auch durch die Abschaltung des ersten Energieversorgungspfads 9/1 keine weitere mechanische und/oder kinetische Arbeit mehr geleistet werden kann, was durch den Pfeil 25 angedeutet ist, so bleibt doch wegen der weiteren Energieversorgung über den zweiten Energieversorgungspfad 9/2 die Möglichkeit, dass ein Austausch von Daten über den Luftspalt erfolgen kann, insbesondere von Daten, die von dem Werkzeugelement 1 mittels des mindestens einen Sensors bereitgestellt und an die Werkzeugmaschine 5 und gegebenenfalls weiter an die übergeordnete Maschinensteuerung abgegeben werden.

Oben wurde erläutert, dass das hier nicht dargestellte Werkzeug des Werkzeugelements 7 mindestens einen Aktuator aufweisen kann, der über den ersten Energieversorgungspfad mit Energie versorgt wird. Dieser ist vorzugsweise mit mindestens einem Sensor versehen, der über den zweiten Energieversorgungspfad 9/2 mit Energie versorgt wird. Auch das Werkzeugelement 7 kann mindestens einen Sensor umfassen, welcher beispielsweise verschiedene Betriebszustände derselben erfasst, aber auch Temperatur- und Druckwerte. Dieser mindestens eine Sensor wird ebenfalls von dem zweiten Energieversorgungspfad mit Energie versorgt.

### Diese Art der Energieversorgung ermöglicht Folgendes:

Wenn die Energieversorgung über den ersten Energieversorgungspfad 9/1 abgeschaltet ist, sei es in einem bewussten und gezielten Abschaltvorgang oder über eine Notabschaltung, sodass keine Energie für mechanische und/oder kinetische Arbeit mehr gegeben ist, so bleibt doch über den zweiten Energieversorgungspfad 9/2 Energie für den mindestens einen Sensor und den Austausch von Daten.

Auf diese Weise ist es möglich, auch nach Abschaltung der Energieversorgung über den ersten Energieversorgungspfad 9/1 den mindestens einen Sensor mit Energie zu versorgen, wobei vorzugsweise das Werkzeugelement 7 und/oder das Werkzeug mindestens einen Sensor umfassen können. Der mindestens eine Sensor des Werkzeugelements 7 kann dazu genutzt werden, Daten über den Betriebszustand des Werkzeugelements 7 an die Werkzeugmaschine 5 und/oder die übergeordnete Maschinensteuerung abzugeben. Ein Benutzer kann also eine Diagnose durchführen und verschiedene Betriebszustände, sei es Temperatur der einzelnen Bauteile des Werkzeugelements 7 oder den Druck verschiedener Medien, zum Beispiel den Schmiermitteldruck für das Werkzeugelement 7 oder Kühl-/Schmiermitteldruck für das Werkzeug zu erfassen, um festzustellen, ob ein Fehler des Werkzeugelements 7 möglicherweise zu einer Abschaltung geführt hat.

Im Übrigen ist es möglich, die Position des mindestens einen Aktuators des Werkzeugs mittels des mindestens einen zugeordneten Sensors zu erfassen, um feststellen zu können, in welchem Betriebszustand sich das Werkzeug befindet und entscheiden zu können, ob und wie die Weiterbearbeitung eines Werkstücks erfolgen kann. Gegebenenfalls bedarf es einer Betätigung des Aktuators, um das Werkzeug vor Wiederaufnahme der Bearbeitung des Werkstücks in eine bestimmte Funktionsstellung zu bringen.

Vorzugsweise ist die dem ersten Energieversorgungspfad 9/1 dienende Energieversorgung gemäß dem Pfeil 11/1 der Werkzeugmaschine 5 beziehungsweise des Werkzeugelements 7 mit einer Schalteinrichtung 31 versehen, die vorzugsweise ein zertifiziertes Sicherheitsrelais umfasst. Die Energieversorgung gemäß dem Pfeil 11/2 des zweiten Energieversorgungspfads 9/2 ist getrennt schaltbar und weist eine hier nicht dargestellte Schalteinrichtung auf. Es ist also möglich, dass bei einem Notaus der Energieversorgung über den Pfeil 11/1, wie oben dargelegt, die Energieversorgung über den Pfeil 11/2 des zweiten Energieversorgungspfads 9/2 aufrecht zu erhalten.

Vorzugsweise ist der erste Energieversorgungspfad 9/1 mit einer 48V-Versorgung verbunden, die beispielsweise eine Leistung von mindestens 800W zur Verfügung stellt. Vorzugsweise ist der zweite Energieversorgungspfad 9/2 über den Pfeil 11/2 mit einer 5V- oder 12V-Versorgung verbunden, die beispielsweise eine Leistung von wenigstens 30W zur Verfügung stellt. Es gilt dabei das oben erwähnte Grundprinzip, dass über den ersten Energieversorgungspfad mehr, vorzugsweise wesentlich mehr Energie, das heißt Leistungsenergie, bereitgestellt wird als über den zweiten Energieversorgungspfad, welcher Kommunikationsenergie bereitstellt und Energie für den mindestens einen Sensor.

## Patentansprüche

1. Übertragungseinrichtung (1) mit
- einer feststehenden übergeordneten Maschine (5),
- einem mit der übergeordneten Maschine koppelbaren, gegenüber dieser rotierbaren Teilnehmer, der mindestens einen Sensor aufweist,
- einem ersten Energieversorgungspfad (9/1) zur berührungslosen Übertragung von Energie von der Maschine (5) hin zu dem Teilnehmer über einen Luftspalt (3) zwischen der Maschine (5) und dem Teilnehmer (7), und
- einem von dem ersten Energieversorgungspfad (9/1) getrennten zweiten Energieversorgungspfad (9/2) zum berührungslosen Austausch von Daten zwischen der Maschine (5) und dem Teilnehmer (7) über den Luftspalt (3), wobei
- der erste Energieversorgungspfad (9/1) eingerichtet ist, Energie für den Teilnehmer (7) bereitzustellen, wobei
- der zweite Energieversorgungspfad (9/2) eingerichtet ist, Energie für den Austausch von Daten bereitzustellen und den mindestens einen Sensor des Teilnehmers mit Energie zu versorgen, und wobei
- der erste und zweite Energieversorgungspfad (9/1,9/2) getrennt schaltbar sind, derart, dass der zweite Energieversorgungspfad (9/2) bei Abschalten des ersten Energieversorgungspfads (9/1) weiter Energie bereitstellt.

2. Übertragungseinrichtung nach Anspruch 1, **dadurch gekennzeichnet, dass** der Teilnehmer (7) mindestens einen Aktuator aufweist, welcher von dem ersten Energieversorgungspfad (9/1) mit Energie versorgt wird, sowie vorzugsweise mindestens einen Sensor, der über den zweiten Energieversorgungspfad Energie erhält.

3. Übertragungseinrichtung nach Anspruch 1 oder 2, **dadurch gekennzeichnet, dass** der erste Energieversorgungspfad (9/1) mittels einer Schalteinrichtung (31) schaltbar ist, die vorzugsweise ein Sicherheitsrelais umfasst.

4. Übertragungseinrichtung nach einem der vorhergehenden Ansprüche, **dadurch gekennzeichnet, dass** über den ersten Energieversorgungspfad (9/1) Leistungsenergie realisiert wird, vorzugsweise über eine 48V-Versorgung, vorzugsweise mit einer Leistung von ≥ 800W.

5. Übertragungseinrichtung nach einem der vorhergehenden Ansprüche, **dadurch gekennzeichnet, dass** über den zweiten Energieversorgungspfad (9/2) Kommunikationsenergie realisiert wird, vorzugsweise über eine 5V- oder 12V-Versorgung, vorzugsweise mit einer Leistung von ≥ 30W.

6. Übertragungseinrichtung nach einem der vorhergehenden Ansprüche, **dadurch gekennzeichnet, dass** die berührungslose Energieübertragung sowie der Austausch von Daten über den Luftspalt (3) induktiv oder kapazitiv oder optisch erfolgt.

7. Übertragungseinrichtung nach einem der vorhergehenden Ansprüche, **dadurch gekennzeichnet, dass** die übergeordnete Maschine (5) eine übergeordnete Maschinensteuerung aufweist, die eingerichtet ist, Daten von dem Teilnehmer (7) zu empfangen und zu verarbeiten sowie Daten an den Teilnehmer (7) zu übertragen.

8. Übertragungseinrichtung nach einem der vorhergehenden Ansprüche, **dadurch gekennzeichnet, dass** die übergeordnete Maschine (5) eine Elektronikeinrichtung (21) aufweist, die eingerichtet ist, die über den ersten und/oder zweiten Energieversorgungspfad (9/1,9/2) übertragene Energie und/oder den Datenaustausch zu regeln oder zu steuern.

9. Übertragungseinrichtung nach einem der vorhergehenden Ansprüche, **dadurch gekennzeichnet, dass** der Teilnehmer (7) eine Elektronikeinrichtung (23) aufweist, die eingerichtet ist, die in den Teilnehmer (7) über den ersten und/oder zweiten Energieversorgungspfad (9/1,9/2) eingespeiste Energie und/oder die an dem Teilnehmer (7) ankommenden Daten und/oder die von dem Teilnehmer (7) bereitgestellten Daten zu regeln oder zu steuern.

10. Übertragungseinrichtung nach einem der vorhergehenden Ansprüche, **dadurch gekennzeichnet, dass** der Teilnehmer (7) einen Motor und/oder ein Getriebe und/oder eine Kupplung und/oder Werkzeug aufweist.

11. Übertragungseinrichtung nach Anspruch 10, **dadurch gekennzeichnet, dass** das Werkzeug des Teilnehmers (7) als Zerspanungswerkzeug oder als Greifwerkzeug oder als Spanwerkzeug ausgebildet ist.

12. Übertragungseinrichtung nach einem der vorhergehenden Ansprüche, **dadurch gekennzeichnet, dass** die übergeordnete Maschine (5) ein Roboter, ein Automatisierungssystem, ein Ladeportal oder eine Handlingsmaschine ist.

13. Übertragungseinrichtung nach einem der vorhergehenden Ansprüche, **dadurch gekennzeichnet, dass** der Teilnehmer (7) ein Adapter, ein Zwischenstück oder ein Werkzeugelement ist.

14. Übertragungseinrichtung nach einem der vorhergehenden Ansprüche, **dadurch gekennzeichnet, dass** der Teilnehmer (7) für die Verwendung in Bearbeitungszentren und/oder in Sonderwerkzeugen eingerichtet ist.

15. Übertragungseinrichtung nach einem der vorhergehenden Ansprüche, **gekennzeichnet durch** einen modularen Aufbau.

## Claims

1. A transmission device (1) comprising
- a stationary superordinate machine (5),
- a participant, which can be coupled to the superordinate machine and can be rotated in relation thereto and which has at least one sensor,
- a first energy supply path (9/1) for the contactless transmission of energy from the machine (5) to the participant via an air gap (3) between the machine (5) and the participant (7), and
- a second energy supply path (9/2), which is separated from the first energy supply path (9/1), for the contactless exchange of data between the machine (5) and the participant (7) via the air gap (3), wherein
- the first energy supply path (9/1) is set up to provide energy for the participant (7), wherein
- the second energy supply path (9/2) is set up to provide energy for the exchange of data and to supply the at least one sensor of the participant with energy, and wherein
- the first and second energy supply path (9/1, 9/2) can be switched separately in such a way that the second energy supply path (9/2) continues to provide energy when the first energy supply path (9/1) is switched off.

2. The transmission device according to claim 1, **characterised in that** the participant (7) has at least one actuator, which the first energy supply path (9/1) supplies with energy, and preferably at least one sensor, which obtains energy via the second energy supply path.

3. The transmission device according to claim 1 or 2, **characterised in that** the first energy supply path (9/1) can be switched by means of a switching device (31), which preferably comprises a safety relay.

4. The transmission device according to any one of the preceding claims, **characterised in that** power energy is realised via the first energy supply path (9/1), preferably via a 48V supply, preferably with a power of ≥ 800W.

5. The transmission device according to any one of the preceding claims, **characterised in that** communication energy is realised via the second energy supply path (9/2), preferably vi a 5V or 12V supply, preferably with a power of ≥ 30W.

6. The transmission device according to any one of the preceding claims, **characterised in that** the contactless energy transmission and the exchange of data takes place inductively or capacitively or optically via the air gap (3).

7. The transmission device according to any one of the preceding claims, **characterised in that** the superordinate machine (5) has a superordinate machine controller, which is set up to receive and to process data from the participant (7) and to transmit data to the participant (7).

8. The transmission device according to any one of the preceding claims, **characterised in that** the superordinate machine (5) has an electronic device (21), which is set up to regulate or to control the energy transmitted via the first and/or second energy supply path (9/1, 9/2), and/or the data exchange.

9. The transmission device according to any one of the preceding claims, **characterised in that** the participant (7) has an electronic device (23), which is set up to regulate or to control the energy fed into the participant (7) via the first and/or second energy supply path (9/1, 9/2), and/or the data arriving at the participant (7), and/or the data provided by the participant (7).

10. The transmission device according to any one of the preceding claims, **characterised in that** the participant (7) has a motor and/or a gear unit and/or a coupling and/or tool.

11. The transmission device according to claim 10, **characterised in that** the tool of the participant (7) is formed as machining tool or as gripping tool or as cutting tool.

12. The transmission device according to any one of the preceding claims, **characterised in that** the superordinate machine (5) is a robot, an automation system, a loading portal, or a handling machine.

13. The transmission device according to any one of the preceding claims, **characterised in that** the participant (7) is an adapter, an intermediate piece, or a tool element.

14. The transmission device according to any one of the preceding claims, **characterised in that** the participant (7) is set up for the use in processing centres and/or in special tools.

15. The transmission device according to any one of the preceding claims, **characterised by** a modular design.

## Revendications

1. Dispositif de transmission (1) avec
- une machine principale (5) fixe,
- un système participant pouvant être connecté à la machine principale, rotatif dans le sens contraire à celle-ci et présentant au moins un capteur,
- un premier trajet d'alimentation en énergie (9/1) pour la transmission d'énergie sans contact de la machine (5) vers le système participant par un espace d'air (3) entre la machine (5) et le système participant (7) et
- un deuxième trajet d'alimentation en énergie (9/2), séparé du premier trajet d'alimentation en énergie (9/1), pour l'échange de données sans contact entre la machine (5) et le système participant (7) par l'espace d'air (3),
- le premier trajet d'alimentation en énergie (9/1) étant conçu pour fournir l'énergie au système participant (7),
- le deuxième trajet d'alimentation en énergie (9/2) étant conçu pour fournir l'énergie pour l'échange de données et pour alimenter en énergie au moins un capteur du système participant et
- le premier et le deuxième trajet d'alimentation en énergie (9/1, 9/2) pouvant être activés séparément de telle sorte que le deuxième trajet d'alimentation en énergie (9/2) continue de fournir de l'énergie lorsque le premier trajet d'alimentation en énergie (9/1) est désactivé.

2. Dispositif de transmission conformément à la revendication 1, **caractérisé en ce que** le système participant (7) présente au moins un actionneur qui est alimenté en énergie par le premier trajet d'alimentation en énergie (9/1) et de préférence au moins un capteur qui reçoit de l'énergie par le deuxième trajet d'alimentation en énergie.

3. Dispositif de transmission conformément à la revendication 1 ou 2, **caractérisé en ce que** le premier trajet d'alimentation en énergie (9/1) peut être activé au moyen d'un dispositif de commutation (31) qui comprend de préférence un relais de sécurité.

4. Dispositif de transmission conformément à l'une des revendications précédentes, **caractérisé en ce que** l'énergie de puissance est réalisée par le premier trajet d'alimentation en énergie (9/1), de préférence par une alimentation 48 V, de préférence avec une puissance ≥ 800 W.

5. Dispositif de transmission conformément à l'une des revendications précédentes, **caractérisé en ce que** l'énergie de communication est réalisée par le deuxième trajet d'alimentation en énergie (9/2), de préférence par une alimentation 5 V ou 12 V, de préférence avec une puissance ≥ 30 W.

6. Dispositif de transmission conformément à l'une des revendications précédentes, **caractérisé en ce que** la transmission d'énergie sans contact et l'échange de données s'opèrent par l'espace d'air (3) de manière inductive ou capacitive ou optique.

7. Dispositif de transmission conformément à l'une des revendications précédentes, **caractérisé en ce que** la machine principale (5) présente une commande de machine principale qui est conçue pour recevoir et traiter des données du système participant (7) et transmettre des données au système participant (7).

8. Dispositif de transmission conformément à l'une des revendications précédentes, **caractérisé en ce que** la machine principale (5) présente un dispositif électronique (21) qui est conçu pour réguler ou contrôler l'énergie transmise par le premier et/ou deuxième trajet d'alimentation en énergie (9/1, 9/2) et/ou l'échange de données.

9. Dispositif de transmission conformément à l'une des revendications précédentes, **caractérisé en ce que** le système participant (7) présente un dispositif électronique (23) qui est conçu pour réguler ou contrôler l'énergie alimentée par le premier et/ou deuxième trajet d'alimentation en énergie (9/1, 9/2) dans le système participant (7) et/ou les données arrivant au système participant (7) et/ou les données fournies par le système participant (7).

10. Dispositif de transmission conformément à l'une des revendications précédentes, **caractérisé en ce que** le système participant (7) présente un moteur et/ou un mécanisme de transmission et/ou un accouplement et/ou un outil.

11. Dispositif de transmission conformément à la revendication 10, **caractérisé en ce que** l'outil du système participant (7) est conçu comme outil d'usinage ou comme outil de préhension ou comme outil de coupe.

12. Dispositif de transmission conformément à l'une des revendications précédentes, **caractérisé en ce que** la machine principale (5) est un robot, un système d'automatisation, un portique de chargement ou une machine de manutention.

13. Dispositif de transmission conformément à l'une des revendications précédentes, **caractérisé en ce que** le système participant (7) est un adaptateur, une entretoise ou un élément d'outil.

14. Dispositif de transmission conformément à l'une des revendications précédentes, **caractérisé en ce que** le système participant (7) est conçu pour une utilisation dans des centres d'usinage et/ou des outils spéciaux.

15. Dispositif de transmission conformément à l'une des revendications précédentes, **caractérisé par** une structure modulaire.
